## Europäisches Patentamt
## European Patent Office
## Office européen des brevets

(19)

(11) Veröffentlichungsnummer: **0 215 933**
**B1**

(12) # EUROPÄISCHE PATENTSCHRIFT

(45) Veröffentlichungstag der Patentschrift:
25.10.89

(21) Anmeldenummer: 86902366.3

(22) Anmeldetag: 14.03.86

(86) Internationale Anmeldenummer:
PCT/EP 86/00141

(87) Internationale Veröffentlichungsnummer:
WO 86/05440 (25.09.86 Gazette 86/21)

(51) Int. Cl.⁴: **B 29 C  67/24** //
B29K23/00, B29K105/24

(54) VERFAHREN ZUR VERARBEITUNG VON HALBZEUG AUS VERNETZTEN KUNSTSTOFFEN.

(30) Priorität: 14.03.85 DE 3509119

(43) Veröffentlichungstag der Anmeldung:
01.04.87 Patentblatt 87/14

(45) Bekanntmachung des Hinweises auf die Patenterteilung:
25.10.89 Patentblatt 89/43

(84) Benannte Vertragsstaaten:
AT BE CH DE FR GB IT LI LU NL SE

(56) Entgegenhaltungen:
EP-A-0 013 754
EP-A-0 078 465
DE-A-1 479 295
DE-A-2 344 129
DE-A-2 435 294
FR-A-1 315 945
FR-A-2 004 578
GB-A-2 104 436
US-A-2 533 609
US-A-3 270 104
US-A-3 964 516

(73) Patentinhaber: WIRSBO PEX Platzer Schwedenbau GmbH, Ernst- Leitz- Strasse 18, D-6056 Heusenstamm (DE)

(72) Erfinder: IMGRAM, Friedrich, Am Frankfurter Weg 2, D-6056 Heusenstamm (DE)

(74) Vertreter: Weisse, Jürgen, Dipl.- Phys., Patentanwälte Dipl.- Phys. Jürgen Weisse Dipl.- Chem. Dr. Rudolf Wolgast Bökenbusch 41 Postfach 11 03 86, D-5620 Velbert 11 Langenberg (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 215 933 B1

## Beschreibung

### Technisches Gebiet

Die Erfindung betrifft ein Verfahren zur Verformung von Halbzeug aus vernetztem Polyolefin, bei dem das Halbzeug auf eine Temperatur oberhalb des Schmelzpunktes und unterhalb der Zersetzungstemperatur des vernetzten Polyolefins vorerwärmt und anschließend in einer Form verformt und unter den Schmelzpunkt abgekühlt wird, wonach das verformte Halbzeug der Form in erstarrtem Zustand entnommen wird.

Die Erfindung betrifft auch ein Verfahren zur Verformung von Halbzeug aus vernetztem Polyolefin, bei dem das Halbzeug auf eine Temperatur oberhalb des Schmelzpunktes und unterhalb der Zersetzungstemperatur des vernetzten Polyolefins vorerwärmt und anschließend verformt und unter Erstarren abgekühlt wird.

### Zugrundeliegender Stand der Technik

Halbzeug, insbesondere Rohre aus vernetzten, thermoelastischen Polyolefinen werden zum Beispiel nach einem Strangpreßverfahren (DE-C-1 679 826, EP-B-0 003 587) erhalten. Die Verarbeitung solchen Materials ist wegen seiner großen Steifigkeit relativ schwierig. So ist z. B. vorgeschlagen worden (Europäische Patentanmeldung Nr. 82 100 466.0), aus Rohren bestehendes Halbzeug dadurch zu formen, daß das Rohr während der Herstellung gestreckt wird und zur Verformung anschließend auf eine Temperatur oberhalb des Kristallitschmelzpunktes erwärmt wird. Dabei nimmt das Rohr wieder seine ursprüngliche, nichtgestreckte Gestalt an und kann sich dadurch an geeignete, jeweils vorgelegte Formen anpassen. Wegen der schwierigen Verarbeitbarkeit des vernetzten, thermoelastischen Materials war man bisher bestrebt, die Vernetzung bei oder nach der Formgebung vorzunehmen, so daß die vorteilhaften Eigenschaften des vernetzten, thermoelastischen Materials nur für die begrenzte Anzahl von Produkten genutzt werden konnten, die sich auf diese Weise herstellen ließen.

Aus der Veröffentlichung EP-A-0 013 754 ist gemäß dem Oberbegriff der Patentansprüche 1 und 5 bekannt, Halbzeug, insbesondere Platten oder Folien aus vernetztem thermoplastischen Material wie Polyamid, Polyester oder Polyolefin in einer Preßform zu Bechern, Schalen oder Tassen zu verformen. Dazu wird die Platte oder Folie außerhalb der Preßform auf eine Temperatur oberhalb des Schmelzpunktes erwärmt und die so vorerwärmte und erweichte Platte oder Folie in die Preßform eingebracht, die auf einer Temperatur zwischen Raumtemperatur und unterhalb des Schmelzpunktes des thermoplastischen Materials gehalten ist. Während der nachfolgenden Pressung wird die vorerwärmte und erweichte Platte oder Folie gleichzeitig verformt und unter ihren Schmelzpunkt abgekühlt, so daß das Formteil der Preßform ohne weitere Verformung entnommen werden kann. Nach diesem bekannten Verfahren wird das vernetzte thermoplastische Material gleichzeitig verformt und abgekühlt. Ein solches Verfahren ist auf vernetzte thermoelastische Polyolefine nicht anwendbar, weil dieses Material nur verformt werden kann, so lange es sich im erweichten Zustand befindet.

Aus der Veröffentlichung GB-A-2 104 436 ist bekannt, ein Rohr aus nichtvernetztem Polyolefin an einem Ende mit einem Anschlußstück zu versehen. Dazu wird das Endteil in einer ersten Verformungsstufe aufgestaucht und in einer zweiten Verformungsstufe in die endgültige Form gebracht.

In beiden Verformungsstufen befindet sich das nichtvernetzte Polyolefin auf einer Temperatur gerade unterhalb des Kristallitschmelzpunktes.

### Offenbarung der Erfindung

Die Aufgabe der vorliegenden Erfindung besteht darin, ein Verfahren zur Formgebung von Rohren aus vernetztem, thermoelastischen Polyolefin anzugeben.

Erfindungsgemäß wird diese Aufgabe dadurch gelöst, daß ein das Halbzeug bildende Rohr aus vernetztem, thermoelastischen Polyolefin in einer Form, die auf einen Temperaturbereich oberhalb des Kristallitschmelzpunktes des vernetzten, elastischen Polyolefins beheizt wird, im Temperaturbereich oberhalb des Kristallitschmelzpunktes unter Ausbildung eines vorbestimmten Profils verformt wird und daß nach erfolgter Profilbildung die Form und damit das Rohr mit dem gebildeten Profil auf eine Temperatur unterhalb des Kristallitschmelzpunktes des vernetzten, thermoelastischen Polyolefins abgekühlt wird.

Weiterhin wird diese Aufgabe unter gleichzeitiger Herstellung einer Anschlußverbindung dadurch gelöst, daß ein Anschlußende eines das Halbzeug bildenden Rohres auf einen Temperaturbereich oberhalb des Kristallitschmelzpunktes des vernetzten, thermoelastischen Polyolefins erwärmt wird, daß das so erwärmte Anschlußende im erwärmten Zustand unter Aufweitung auf ein Rohranschlußstück aufgebracht wird, wobei nach dem Abkühlen unter den Kristallitschmelzpunkt eine feste und dichte Verbindung zwischen dem Anschlußende des Rohres und dem Rohranschlußstück erhalten wird.

Vernetzte, thermoelastische Polyolefine erfordern für ihre Verformung, daß das Material während des gesamten Verformungsvorgangs sich im erweichten Zustand befindet, d. h. eine Temperatur in einem Bereich hat, die hinreichend hoch oberhalb des Kristallitschmelzpunktes liegt. Dies wird bei dem erfindungsgemäßen Verfahren dadurch sichergestellt, daß die Form während der Verformung ebenfalls eine Temperatur in dem vorgenannten Bereich oberhalb des Kristallitschmelzpunktes besitzt. In dieser Weise wird zuverlässig eine vollständige und gleichförmige Verformung zu dem gewünschten Rohrprofil sichergestellt. Das so hergestellte Rohrprofil ist auch über lange Standzeiten und weite Temperaturbereiche formbeständig, z. B. bei vernetztem, thermoelastischen Polyethylen im Temperaturbereich von -100°C bis + 130°C.

Bei Erwärmung über den Kristallitschmelzpunkt verliert das so geformte Produkt seine eingeprägte Form, weil das vernetzte thermoelastische Polyolefin bestrebt ist, wieder seine ursprüngliche Form anzunehmen. Diese Eigenschaft bewirkt bei dem erfindungsgemäßen Verfahren zur Herstellung der Anschlußverbindung, daß das Anschlußende des Rohres eine gesicherte und dichte Verbindung mit dem Anschlußstück eingeht.

## Kurze Beschreibung der Zeichnungen

Nachfolgend werden unter Bezugnahme auf die zugehörigen Zeichnungen einige Ausführungsbeispiele für die Anwendung des erfindungsgemäßen Verfahrens anhand der Bezugszeichen im einzelnen erläutert und beschrieben. Es zeigen

Fig. 1a, 1b einen schematischen Längsschnitt bzw. Querschnitt durch ein Blasformwerkzeug für die Durchführung eines ersten Ausführungsbeispiels des erfindungsgemäßen Verfahrens;

Fig. 2 einen Längsschnitt durch eine nach einem sechsten Ausführungsbeispiel erfindungsgemäßen Verfahren hergestellte Rohrverbindung.

## Bevorzugte Ausführungen der Erfindung

Die in den Ausführungsbeispielen beschriebenen Halbzeuge bestehen im allgemeinen aus einem vernetztem, thermoelastischen Kunststoff und insbesondere aus chemisch vernetztem, thermoelastischem Polyolefin, das nach dem eingangs erwähnten Strangpreßverfahren hergestellt worden ist. Gleiche Ergebnisse können sowohl mit Halbzeug aus strahlenchemisch vernetztem, thermoelastischem Polyolefin, als auch mit Halbzeug aus anderen vernetzten, thermoelastischen Kunststoffen erhalten werden.

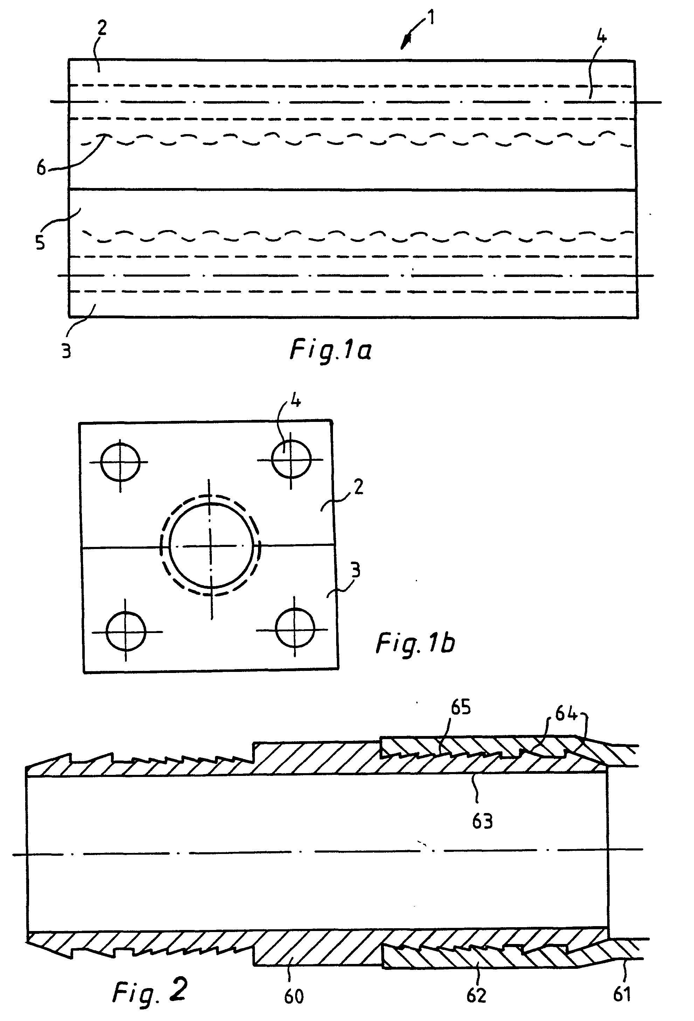

Ein Ausführungsbeispiel einer Blasform 1 zur Herstellung von Rohren, bei denen vorbestimmte Abschnitte eine erhöhte Biegsamkeit aufweisen, ist in Fig. 1a und 1b im Längsschnitt bzw. Querschnitt dargestellt. Die Blasform 1 besteht aus zwei Halbformen 2 und 3, die im zusammengebauten Zustand zwischen sich einen Formhohlraum 5 bestimmen. Die Halbformen 2 und 3 werden in geeigneter Weise, z. B. durch Schraubverbindungen oder hydraulisch zusammengehalten. Durch die Halbformen 2 und 3 verlaufen Kanäle 4, die nach Bedarf mit einem Heizmedium oder Kühlmedium beschickt werden können. In dem dargestellten Ausführungsbeispiel erstreckt sich der Formhohlraum 5 entlang der Längsachse durch die Blasform 1, und die Innenwand des Formhohlraums 5 ist mit einer wellenförmigen Struktur 6 versehen, die quer zur Längsachse der Blasform 1 verläuft.

Zur Blasformung wird ein nicht im einzelnen dargestelltes Rohr aus vernetztem, thermoelastischem Kunststoff mit dem vorbestimmten Abschnitt in die Blasform 1 eingebracht; die Kanäle 4 der Blasform 1 werden an ein Heizmedium angeschlossen, und die Blasform 1 wird auf eine Temperatur im Erweichungsbereich des vernetzten, thermoelastischen Kunststoffs erwärmt. Das Rohrstück kann aber auch bereits in einem vorgeheizten Zustand in eine vorgeheizte Blasform nach Art der Blasform 1 eingebracht werden. Die Formgebung erfolgt dadurch, daß das Rohr mit einem Innendruck beaufschlagt wird, unter dessen Einwirkung die Rohrwandung an die wellenförmige Struktur 6 der Innenwand der Blasform 1 angepreßt wird. Das Rohr kann dabei auf verschiedene, an sich bekannte Verfahrensweisen mit dem erforderlichen Innendruck beaufschlagt werden. Eine Verfahrensweise besteht z. B. darin, das Rohr an einem Ende durch einen Blindstopfen druckdicht zu verschließen und am anderen Ende druckdicht an eine Druckquelle anzuschließen. Eine andere Verfahrensweise besteht beispielsweise darin, das Rohr an einem Ende druckdicht an eine Druckquelle anzuschließen und am anderen Ende mit Hilfe einer Abquetschkante, die an den Halbformen 2 und 3 ausgebildet ist, druckdicht zu verschließen. Nach dem Formvorgang läßt man das geformte Rohr in der Blasform 1 abkühlen; dabei kann beispielsweise ein Kühlmittel durch die Kanäle 4 geleitet werden. Das geformte, in dem vorgewählten Abschnitt mit Ringwülsten versehene Rohr wird der Blasform 1 nach Abkühlung unter den Erweichungsbereich des Kunststoffs entnommen.

In entsprechender Weise kann die Verformung auch dadurch bewirkt werden, daß das vorgeheizte Rohr mit einer geeignet ausgebildeten Innenform versehen und evakuiert wird. Zur Verformung wird dann das evakuierte Rohr von außen mit Luftdruck beaufschlagt.

Fig. 2 zeigt ein weiteres Ausführungsbeispiel des Verfahrens, bei dem ein Rohranschlußstück 60 mit einem Rohr 61 aus vernetztem, thermoelastischem Polyethylen hoher Dichte verbunden wird. Das Rohr 61 wird im Bereich seines Endes 62 auf Temperaturen im Bereich oberhalb des Kristallitschmelzpunktes von vernetztem, thermoelastischem Polyethylen, z. B. 140 bis 160°C, erwärmt und im erwärmten Zustand auf ein Rohranschlußstück 63 aufgeschoben, das zwei Schlauchnippel 64 und weitere Dichtelemente 65 trägt. Nach dem Abkühlen unter den Kristallitschmelzpunkt ist das Polyethylenrohr 61 fest und dicht mit dem Rohranschlußstück 62 verbunden.

## Patentansprüche

1. Verfahren zur Verformung von Halbzeug aus vernetztem Polyolefin, bei dem das Halbzeug auf eine Temperatur oberhalb des Schmelzpunktes und unterhalb der Zersetzungstemperatur des vernetzten Polyolefins vorerwärmt und anschließend in einer Form verformt und unter den Schmelzpunkt abgekühlt wird, wonach das verformte Halbzeug der Form in erstarrtem Zustand entnommen wird,

dadurch gekennzeichnet, daß

ein das Halbzeug bildende Rohr aus vernetztem, thermoelastischen Polyolefin in einer Form, die auf einen Temperaturbereich oberhalb des Kristallitschmelzpunktes des vernetzten thermoelastischen Polyolefins beheizt wird, im Temperaturbereich oberhalb des Kristallitschmelzpunktes unter Ausbildung eines vorbestimmten Profils verformt wird und daß nach erfolgter Profilbildung die Form und damit das Rohr mit dem gebildeten Profil auf eine Temperatur unterhalb des Kristallitschmelzpunktes des vernetzten, thermoelastischen Polyolefins abgekühlt wird.

2. Verfahren nach Anspruch 1, dadurch gekennzeichnet, daß ein vorgewählter Bereich des Rohres in eine beheizbare und kühlbare Blasform eingelegt wird, deren Innenwand eine quer zur Längsachse der Blasform verlaufende wellenförmige Struktur aufweist, und daß der vorgewählte Bereich des Rohres während der Verformung in dem Temperaturbereich oberhalb des Kristallitschmelzpunktes durch Blasformen mit einem von Ringwülsten gebildeten Profil versehen wird.

3. Verfahren nach Anspruch 2, dadurch gekennzeichnet, daß das Rohr mit einem vorgewählten Bereich zwischen seinen Enden in die Blasform eingelegt wird und durch die Blasformung mit einem vorgewählten Bereich erhöhter Biegsamkeit versehen wird.

4. Verfahren nach Anspruch 2, dadurch gekennzeichnet, daß das Rohr mit einem vorgewählten Bereich an mindestens einem Ende in die Blasform eingelegt wird und durch die Blasformung in dem vorgewählten Bereich an mindestens einem Ende mit einem sickenförmigen Profil versehen wird.

5. Verfahren zur Verformung von Halbzeug aus vernetztem Polyolefin, bei dem das Halbzeug auf eine Temperatur oberhalb des Schmelzpunktes und unterhalb der Zersetzungstemperatur des vernetzten Polyolefins vorerwärmt und anschließend verformt und unter Erstarren abgekühlt wird,
dadurch gekennzeichnet, daß ein Anschlußende eines das Halbzeug bildenden Rohres aus vernetztem, thermoelastischen Polyolefin auf einen Temperaturbereich oberhalb des Kristallitschmelzpunktes des vernetzten, thermoelastischen Polyolefins erwärmt wird, daß das so erwärmte Anschlußende im erwärmten Zustand unter Aufweitung auf ein Rohranschlußstück aufgebracht wird, wobei nach dem Abkühlen unter den Kristallitschmelzpunkt eine feste und dichte Verbindung zwischen dem Anschlußende des Rohres und dem Rohranschlußstück erhalten wird.

6. Verfahren nach Anspruch 5, dadurch gekennzeichnet, daß das Anschlußende des Rohres aus vernetztem Polyolefin so ausgewählt wird, daß sein Innendurchmesser mit dem Innendurchmesser des Rohranschlußstückes vergleichbar ist.

## Revendications

1. Procédé pour la déformation de produits demi-finis de polyoléfine réticulée, dans lequel les produits demi-finis sont préchauffés à une température supérieure au point de fusion et inférieure à la température de décomposition de la polyoléfine réticulée, et ensuite ils sont déformés dans un moule et refroidis au dessous du point de fusion, après quoi les produits demi-finis déformés sont prélevés du moule en état solidifié,

caractérisé par le fait que

un tuyau de polyoléfine réticulée thermoélastique formant les produits semi-finis est déformé dans un moule chauffé à une zone de température supérieure au point de fusion de cristallite de la polyoléfine réticulée thermoélastique, dans la zone de température supérieure au point de fusion de cristallite en formant un profil prédéterminé, et par le fait qu'après formation du profil, le moule et avec cela le tuyau avec le profil formé sont refroidis à une température inférieure au point de fusion de cristallite de la polyoléfine réticulée thermoélastique.

2. Procédé selon la revendication 1, caractérisé par le fait qu'une zone présélectée du tuyau est insérée dans un moule de soufflage chauffable et refroidissable, dont la paroi intérieure a une structure ondulée transversale à l'axe longitudinal du moule de soufflage, et que la zone présélectée du tuyau est munie, lors de la déformation dans la zone de température supérieure au point de fusion de cristallite, d'un profil formé de bourrelets annulaires par moulage par soufflage.

3. Procédé selon la revendication 2, caracétrisé par le fait que le tuyau est inséré avec une zone présélectée entre ses extrémités dans le moule de soufflage, et est muni d'une zone présélectée de flexibilité élargie par moulage par soufflage.

4. Procédé selon la revendication 2, caractérisé par le fait que le tuyau est inséré avec une zone présélectée à au moins une extrémité dans le moule de soufflage et est pourvu d'un profil en forme de moulures dans la zone présélectée à au moins une extrémité par le moulage par soufflage.

5. Procédé pour la déformation de produits demi-finis de polyoléfine réticulée, dans lequel les produits demi-finis sont préchauffés à une température supérieure au point de fusion et inférieure à la température de décomposition de la polyoléfine réticulée, et ensuite ils sont déformés et refroidis sous solidification,

caractérisé par le fait qu'une extrémité de raccord d'un tuyau de polyoléfine réticulée thermoélastique formant les produits semi-finis est chauffée à une zone de température supérieure au point de fusion de cristallite de la polyoléfine réticulée thermoélastique, que l'extrémité de raccord ainsi chauffée est appliquée sur un élément de raccord de tuyau en état chauffé sous élargissement, après le refroidissement au dessous du point de fusion de cristallite, une connexion fixe et étanche étant obtenue entre l'extrémité de raccord du tuyau et l'élément de raccord de tuyau.

6. Procédé selon la revendication 5, caractérisé par le fait que l'extrémité de raccord du tuyau de polyoléfine réticulée est choisie de sorte que son diamètre intérieur est comparable au diamètre intérieur de l'élément de raccord de tuyau.

**Claims**

1. Method of shaping semifinished products made of cross-linked polyolefin in which method the semifinished product is preheated to a temperature above the melting point and below the decomposition temperature of the cross-linked polyolefin and subsequently shaped and cooled below the melting point in a mold whereafter the shaped semifinished product is removed from the mold in solidified condition,

characterised in that

a tube constituting the semifinished product and made of cross-linked thermo-elastic polyolefin, is shaped with the formation of a predetermined profile in a temperature range above the crystallite melting point in a mold heated to the temperature range above the crystallite melting point of the cross-linked thermo-elastic polyolefin and that, after formation of the profile is effected, the mold and therewith the tube having the formed profile is cooled to a temperature below the crystallite melting point of the cross-linked thermo-elastic polyolefin.

2. Method according to claim 1, characterised in that a preselected section of the tube is placed into a heatable and coolable mold having an internal wall which comprises an undulating structure extending transversely to the longitudinal axis of the blow mold, and that the preselected section of the tube, during shaping in the temperature range above the crystallite melting point, is provided by blow molding with a profile formed by annular beads. .

3. Method according to claim 2, characterised in that the tube is placed into the blow mold with a preselected section between its ends and is provided by blow molding with a preselected section of increased flexibility.

4. Method according to claim 2 characterised in that the tube is placed into the blow mold with a preselected section at least at one end and is provided by blow molding in the preselected section at the at least one end with a bead-shaped profile.

5. Method of shaping semifinished products made of cross-linked polyolefin in which method the semifinished product is preheated to a temperature above the melting point and below the decomposition temperature of the cross-linked polyolefin and subsequently shaped and cooled with solidification, characterised in that a connecting end of a tube constituting the semifinished product and made of cross-linked thermo-elastic polyolefin, is heated to a temperature range above the crystallite melting point of the cross-linked thermo-elastic polyolefin, that the thus heated connecting end ist placed in the heated condition with widening onto a tube connector whereby there is obtained a firm and sealing connection between the connecting end of the tube and the tube connector after cooling below the crystallite melting point.

6. Method according to claim 5, characterised in that the connecting end of the tube made of cross-linked polyolefin is selected such that its internal diameter is comparable with the internal diameter of the tube connector.

Fig.1a

Fig.1b

Fig. 2